# EUROPÄISCHE PATENTANMELDUNG

(11) **EP 3 865 704 A1**
(43) Veröffentlichungstag der Anmeldung: **18.08.2021**
(21) Anmeldenummer: 20157160.1
(22) Anmeldetag: 13.02.2020
(51) Int. Cl.: F03D 3/06, F03D 7/06

(54) **ROTORBLATT, ROTOR UND SYSTEM MIT ROTOR UND ROTORBLATT**

(71) Anmelder: Jensen, Sebastian, 29459 Clenze (DE); Buddenhagen, Frank, 22397 Hamburg (DE)
(72) Erfinder: Jensen, Sebastian, 29459 Clenze (DE); Buddenhagen, Frank, 22397 Hamburg (DE)
(74) Vertreter: Zimmermann & Partner Patentanwälte mbB

(57) **Zusammenfassung**

Ein Rotorblatt (110, 120, 130) für einen Rotor (100) mit vertikaler Rotorwelle (M) wird zum strömungsinduzierten Antreiben des Rotors (100) in einer Antriebsrichtung (U) bereitgestellt. Das Rotorblatt (110, 120, 130) umfasst eine Mehrzahl von in Antriebsrichtung (U( hintereinander beabstandet angeordneten Anströmelementen (111, 112, 113, 114, 115), wobei jedes Anströmelement eine Vorderkante (151) in Antriebsrichtung (U) und eine Hinterkante (152) in Antriebsrichtung (U) umfasst. Die Hinterkante (152) und die Vorderkante (151) sind jeweils so geformt, dass sie jeweils bei Anströmung von einer Windkomponente (v1, v2) eine in Antriebsrichtung (U) wirkende Antriebskraft auf den Rotor (100) übertragen.

Des Weiteren werden ein Rotor (100) mit Rotorblatt (110, 120, 130) und ein System (10) mit Rotor (100) und elektrischer Maschine (200) angegeben.

## Beschreibung

### TECHNISCHES GEBIET

Die vorliegende Offenbarung betrifft ein Rotorblatt, einen Rotor mit mindestens einem hierin beschriebenen Rotorblatt, sowie ein System mit einem hierin beschriebenen Rotor, Rotorblatt und einer elektrischen Maschine.

### STAND DER TECHNIK

Es sind Rotoren bekannt, die eine im installierten Zustand im Wesentlichen senkrecht verlaufende Rotationsachse aufweisen, durch welche eine Rotorwelle verläuft. An der Rotorwelle sind ein oder mehrere Rotorblätter befestigt, die auch als Flügel oder Blattschaufeln bezeichnet werden. Jedes der Rotorblätter stellt eine Angriffsfläche für eine Windkomponente bereit. Wenn die Windkomponente an der Angriffsfläche angreift, dreht sie den Rotor um die Rotationsachse in einer durch die Form der Rotorblätter definierten und damit vorab festgelegten Antriebsrichtung.

Ein solcher Rotor mit einer senkrecht verlaufenden Rotorwelle hat gegenüber Rotoren mit horizontaler Rotorwelle den Vorteil, dass eine Verschwenkung in Abhängigkeit der Windrichtung und/oder die Verstellung eines Anstellwinkels des Rotorblattes nicht erforderlich ist. Bekannte Rotoren mit senkrecht verlaufender Rotorwelle schließen beispielsweise einen Savoniusrotor, einen Darrieus-Rotor und einen H-Rotor ein. Bei einem H-Rotor sind die typischerweise mehreren Rotorblätter mit der Rotorwelle über mechanische Verbindungselemente verbunden und verlaufen im Wesentlichen parallel zur Rotorwelle.

Die aus dem Stand der Technik bekannten herkömmlichen Rotorblätter haben in der Regel eine Formgebung, welche weitgehend unabhängig von der zu einem jeweiligen Zeitpunkt vorliegenden Positionierung des Rotorblatts zur Windrichtung beim Angeströmtwerden eine Kraft in Antriebsrichtung auf die Rotorwelle übertragen. Dennoch besteht ein Bedürfnis, den Wirkungsgrad von bekannten Rotoren zu erhöhen.

### ZUSAMMENFASSUNG DER ERFINDUNG

Zum Lösen der Aufgabe wird ein Rotorblatt gemäß dem unabhängigen Anspruch 1 für einen Rotor mit vertikaler Rotorwelle angegeben. Vorteilhafte Weiterbildungen sind in den abhängigen Ansprüchen angegeben. Weiterbildungen, die das Rotorblatt nach dem unabhängigen Anspruch 1 nutzen, sind ein Rotor gemäß den Ansprüchen 12-13 und ein System gemäß den Ansprüchen 14-15.

Gemäß einer Ausführungsform umfasst ein Rotorblatt für einen Rotor mit vertikaler Rotorwelle und zum strömungsinduzierten Antreiben des Rotors in einer Antriebsrichtung eine Mehrzahl von in Antriebsrichtung hintereinander beabstandet angeordneten Anströmelementen , wobei jedes Anströmelement eine Vorderkante in Antriebsrichtung und eine Hinterkante in Antriebsrichtung umfasst, und wobei die Hinterkante und die Vorderkante jeweils so geformt sind, dass sie jeweils bei Anströmung von einer Windkomponente eine in Antriebsrichtung wirkende Antriebskraft auf den Rotor übertragen.

Die Antriebsrichtung, wie hierin verwendet, entspricht der Rotationsrichtung oder Drehrichtung des Rotors und ist durch die Anordnung und Formgebung des Rotorblatts bzw. der Rotorblätter vorbestimmt bzw. vorgegeben. Die Antriebsrichtung entspricht hierin auch der Umfangsrichtung der einzelnen Elemente, die um die zentrale vertikal verlaufende Rotorwelle herum angeordnet sind. Die Antriebskraft, wie hierin verwendet, ist stets die in Antriebsrichtung (in Rotationsrichtung) wirkende Kraft.

Wenn hierin von "Rotorblatt" die Rede ist, erfolgt die Beschreibung typischerweise für ein einziges Rotorblatt, wobei nicht ausgeschlossen ist, dass ein Rotor mehrere identische oder mehrere gleichartige Rotorblätter aufweist, wie hierin beschrieben. Typischerweise weist ein Rotor mehrere Rotorblätter auf, wie hierin beschrieben, beispielsweise und ohne Einschränkung drei Rotorblätter. Typischerweise sind die mehreren Rotorblätter in Umfangsrichtung äquidistant angeordnet. Beispielweise und ohne Einschränkung sind drei Rotorblätter in einem gegenseitigen Abstand von 120° in Umfangsrichtung angeordnet, wobei ein geeignetes Abstandsmaß z. B. der Winkel von radialen Linien durch vergleichbare Punkte auf zwei benachbarten Rotorblättern ist.

Ein Anströmelement, wie hierin verwendet, ist ein Bestandteil eines Rotorblattes. Insbesondere weist ein hierin beschriebenes Rotorblatt mehrere Anströmelemente auf. Die Offenbarung ist jedoch nicht so zu verstehen, dass ein (z. B. durchgehend ausgebildetes) Rotorblatt selbst ein (einziges) Anströmelement bildet und mehrere Rotorblätter dann eine Mehrzahl von Anströmelementen bilden würden. Vielmehr weist ein Rotorblatt bezogen auf den Gesamtumfang eines Rotors, der mit dem Rotorblatt versehen ist, eine vergleichsweise kompakte Ausdehnung auf, beispielsweise eine Ausdehnung in Umfangsrichtung von weniger als 70°, insbesondere von weniger als 60° und typischerweise von weniger als 50°. Ein solches kompaktes Rotorblatt weist dann die mehreren Anströmelemente auf.

Ein Anströmelement des Rotorblattes verläuft typischerweise im Wesentlichen parallel zur Rotorwelle. Das Anströmelement kann in der Richtung parallel zur Rotorwelle durchgehend, insbesondere einstückig ausgebildet sein. Ohne Einschränkung darauf kann das Anströmelement in der Richtung parallel zur Rotorwelle aber auch unterbrochen sein. Typischerweise verläuft das Anströmelement entlang großer Teile der Länge der Rotorwelle in Axialrichtung, beispielsweise mehr als 90% oder mehr als 95% der Gesamtlänge der Rotorwelle.

In Ausführungsformen weist die Vorderkante des Anströmelements eine Form auf, die eine dynamische Strömungsform zumindest eines Teils des Rotorblatts beschreibt. Typischerweise weist jede Vorderkante die Form auf, die die dynamische Strömungsform zumindest eines Teils des Rotorblatts beschreibt. Die dynamische Strömungsform wird derart beschrieben, dass die Vorderkante dann, wenn der zu einem Zeitpunkt am Betriebsort des Rotors, der mit dem Rotorblatt ausgestattet ist, vorherrschende Wind eine Windkomponente aufweist, die das Anströmelement aus einer Richtung vorlicher als die Querabrichtung des Rotorblattes anströmt, die Antriebskraft durch einen dynamischen Strömungseffekt auf den Rotor überträgt. Der dynamische Strömungseffekt, mittels dessen die Antriebskraft auf den Rotor übertragen wird, ist beispielsweise ein dynamischer Auftriebseffekt, der durch die Installationsausrichtung des Rotorblattes beim Angeströmtwerden die Kraft in Antriebsrichtung ausübt. Als die Querabrichtung wird die Richtung angenommen, die ausgehend vom Achsmittelpunkt der Rotorwelle einen Mittelpunkt des Anströmelements radial schneidet. Ein Mittelpunkt des Anströmelements kann beispielsweise durch den mechanischen oder den mathematischen Schwerpunkt des Anströmelements definiert werden. Die Anströmrichtung ist vorlicher als die Querabrichtung, wenn der das jeweilige Anströmelement anströmende Wind bezogen auf die Rotationsrichtung des Rotors von vorn kommt.

In Ausführungsformen beschreibt eine Einhüllende der Mehrzahl von Anströmelementen die dynamische Strömungsform des Rotorblatts. Unter einer Einhüllenden wird typischerweise eine Hüllfläche verstanden, die eine gemeinsame Fläche der äußersten Punkte der Kanten der Anströmelemente eines Rotorblattes bildet. In der Regel wird die Einhüllende durch eine gedachte geradlinige Verbindung der äußersten Kantenpunkte der Anströmelemente eines Rotorblattes gebildet.

In Ausführungsformen beschreibt die Vorderkante des Anströmelements eine Fläche, die in Antriebsrichtung konvex gewölbt ist (eine in Antriebsrichtung konvexe Fläche). Auf ähnliche Weise beschreibt bei dieser Ausführungsform die Hinterkante des Anströmelements eine Fläche, die in Antriebsrichtung konkav gewölbt ist (eine in Antriebsrichtung konkave Fläche). Eine vorlicher als querab auftreffende Windkomponente trifft im Wesentlichen auf die Vorderkante auf und strömt entlang der konvex gewölbten Fläche, so dass aus ihr eine dynamische Strömungskraft herrührt, die in Antriebsrichtung wirkt und als in die Antriebsrichtung wirkende Antriebskraft auf den Rotor übertragen wird. Eine achterlicher als querab auftreffende Windkomponente trifft im Wesentlichen auf die Hinterkante auf, "verfängt" sich an der konkav gewölbten Hinterkante und übt eine Druckkraft in Antriebsrichtung aus, die als die in Antriebsrichtung wirkende Antriebskraft auf den Rotor übertragen wird.

In Ausführungsformen sind die konvexe Fläche und die konkave Fläche jeweils durchgehend gewölbt. Durchgehend gewölbt, wie hierin verwendet, beschreibt insbesondere eine im Wesentlichen von scharfen Kanten, Spitzen und/oder Ecken freie Oberfläche. Mit anderen Worten: Keine von konvexer Fläche und konkaver Fläche weist einen nicht-differenzierbaren Extremwert auf, und zwar in jeder Raumrichtung. Insbesondere ist jede von konvexer Fläche und konkaver Fläche im Wesentlichen an jedem Ort (in jedem ihrer Punkte) im mathematischen Sinne differenzierbar. Die oben beschriebenen Bedingungen dieser Ausführungsform gelten für die Bereiche der konvexen bzw. konkaven Fläche jenseits der jeweiligen Außenkanten, d. h. selbstverständlich enden die Flächen jeweils an ihren Außenkanten, wo diese Bedingungen dann nicht mehr erfüllt sind.

In Ausführungsformen weist die Hinterkante eines oder mehrerer, typischerweise sämtlicher Anströmelemente eine Angriffsfläche auf, deren Flächeninhalt größer ist als eine planare Fläche, die durch die in Antriebsrichtung am weitesten hinten liegenden Punkte des jeweiligen Anströmelements entlang einer Sekantenschar ausgehend von der Rotationsachse in Radialrichtung gezogen wird.

In Ausführungsformen beträgt ein Abstand zwischen der Vorderkante und der Hinterkante einer Mehrzahl der Anströmelemente weniger als 5 cm. Mit anderen Worten: Eine Materialstärke (z. B. eine Blechstärke) der Anströmelemente beträgt weniger als 5 cm. Typische Werte für die Materialstärke sind weniger als 3 cm oder weniger als 2 cm. Die Anströmelemente sind also dünn im Vergleich zur Gesamtausdehnung des jeweiligen Rotorblattes, das sie bilden, und zwar jeweils in Umfangsrichtung. Typischerweise gilt dies für eine Mehrzahl der Anströmelemente, vorzugsweise für sämtliche Anströmelemente des Rotorblattes, das sie bilden.

In Ausführungsformen sind die Anströmelemente derart in Antriebsrichtung hintereinander angeordnet, dass in Umfangsrichtung zwischen zwei benachbarten Anströmelementen ein Spalt mit einer jeweiligen Spaltbreite ausgebildet ist. Die Spaltbreite ermöglicht ein Eingreifen der Windkomponente zwischen den benachbarten Anströmelementen. Durch die Möglichkeit, dass die Windkomponente zwischen den benachbarten Anströmelementen eingreifen kann, trägt jedes Anströmelement für sich zur Erzeugung und Übertragung der Antriebskraft auf den Rotor bei, wodurch der Wirkungsgrad gesteigert werden kann.

In Ausführungsformen kann ein oder mehrere Parameter an Strömungsbedingungen angepasst werden, die im Regelbetrieb an einem bestimmten Installationsort zu erwarten sind. Alternativ oder zusätzlich kann der eine oder die mehreren Parameter an eine Größe des Rotorblattes angepasst werden, beispielsweise eine Ausdehnung des Rotorblattes in Richtung der Rotationsachse und/oder eine Ausdehnung des Rotorblattes in Umfangs- und/oder Radialrichtung. Der oder die Parameter umfassen typischerweise eine oder mehrere der folgenden Größen: Die Spaltbreite zwischen zwei benachbarten Anströmelementen; den Verlauf unterschiedlicher Spaltbreiten zwischen einer Mehrzahl benachbarter Anströmelemente; den Krümmungsradius eines Anströmelements; den Verlauf unterschiedlicher Krümmungsradien einer Mehrzahl von Anströmelementen; die Anzahl der Anströmelemente pro Rotorblatt.

In Ausführungsformen sind eines oder mehrere, typischerweise alle Anströmelemente des Rotorblatts und vorzugsweise das Rotorblatt insgesamt im Wesentlichen aus einem Metallmaterial gebildet. Das Metallmaterial ist typischerweise so gewählt, dass es wenig korrosiv für die am Installationsort zu erwartenden Bedingungen ist, robust ist (d. h. auch bei statischen und dynamischen Belastungen eine hohe zu erwartende Lebensdauer aufweist) und/oder eine angemessene spezifische Masse aufweist. Ein Beispiel für ein typischerweise verwendetes Metallmaterial ist ein Edelstahlmaterial.

Gemäß einem weiteren Aspekt wird ein Rotor angegeben, der eine vertikal verlaufende Rotorwelle und mindestens ein hierin beschriebenes Rotorblatt umfasst.

In einer Weiterbildung des Rotors ist die Anzahl der Rotorblätter für den Rotor an im Regelbetrieb zu erwartende Strömungsbedingungen an einem Installationsort und/oder an eine Größe des Rotorblattes angepasst, beispielsweise eine Ausdehnung der Rotorblätter in Richtung der Rotationsachse und/oder eine Ausdehnung der Rotorblätter in Umfangs- und/oder Radialrichtung.

Gemäß noch einem weiteren Aspekt wird ein System angegeben. Das System umfasst einen hierin beschriebenen Rotor und eine elektrische Maschine. Die Rotorwelle des Rotors ist mechanisch an eine Maschinenwelle der elektrischen Maschine gekoppelt. Die elektrische Maschine ist typischerweise zumindest als Generator betreibbar, nimmt ein Drehmoment von der Rotorwelle über ihre Maschinenwelle entgegen und gibt an einer oder mehreren Generatorklemmen einen elektrischen Strom ab.

In einer Weiterbildung des Systems umfasst dieses ferner eine Steuerungseinheit zum Erfassen einer Drehzahl der Maschinenwelle und/oder der Rotorwelle und zum Ansteuern der elektrischen Maschine wahlweise im generatorischen Betrieb und im motorischen Betrieb. Die Steuereinheit ist derart konfiguriert, dass sie die elektrische Maschine dann, wenn die erfasste Drehzahl über einen vorgegebenen Zeitraum einen vorgegebenen Schwellenwert unterschreitet, im motorischen Betrieb ansteuert.

Der Zeitraum kann beispielsweise ein Zeitraum sein, der 10 Sekunden oder weniger entspricht, beispielsweise 5 Sekunden oder weniger. Der Drehzahl-Schwellenwert kann beispielsweise eine Drehzahl von 10 Umdrehungen pro Minute oder weniger sein, beispielsweise 5 Umdrehungen pro Minute oder weniger. Diese Werte sind beispielhaft und nicht einschränkend zu verstehen. Typischerweise ist zumindest einer von dem Zeitraum und dem Drehzahl-Schwellenwert so gewählt, dass mit großer Wahrscheinlichkeit davon ausgegangen werden kann, dass der Rotor nicht in einen Haftreibungszustand übergeht.

### KURZE BESCHREIBUNG DER ZEICHNUNGEN

Fig. 1 zeigt eine Schnittansicht eines Rotors mit Rotorblättern gemäß einer Ausführungsform, und zwar beim Schnitt durch den Rotor entlang einer Ebene senkrecht zur Axialrichtung des Rotors.
Fig. 2 zeigt die Schnittansicht aus Fig. 1 mit weiteren Erläuterungen; und
Fig. 3 zeigt ein schematisches Diagramm eines Systems mit einem Rotor gemäß einer Ausführungsform und mit einer Steuerungseinheit.

### BESCHREIBUNG VON AUSFÜHRUNGSFORM(EN)

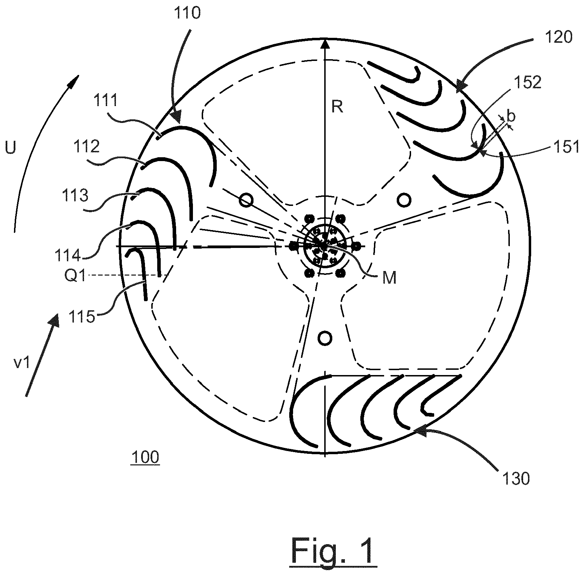

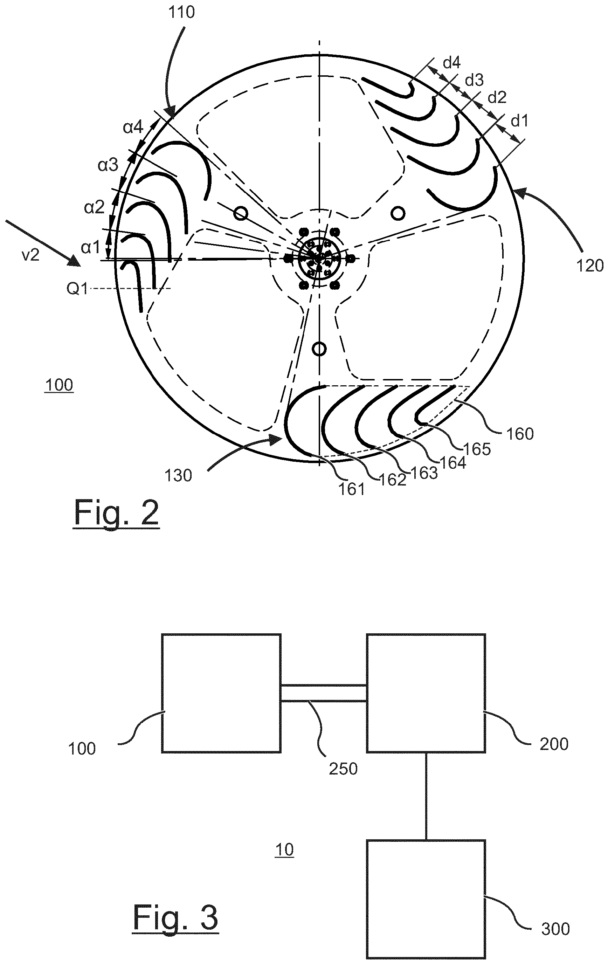

Fig. 1 und Fig. 2 sind eine Schnittansicht durch einen Rotor 100 entlang einer Ebene, die senkrecht zur Richtung einer Rotorwelle M des Rotors 100 verläuft. Die in Fig. 1 und Fig. 2 gezeigte Ausführungsform ist dieselbe, und Fig. 1 und Fig. 2 unterscheiden sich aus Gründen der Übersichtlichkeit nur in den zur Erläuterung bereitgestellten Beschriftungen und Bezugszeichen. Die folgende Beschreibung nimmt daher gleichzeitigen Bezug auf Fig. 1 und Fig. 2.

Die Rotorwelle M des Rotors 100 definiert gleichzeitig die Richtung der Rotationsachse, d. h. die Axialrichtung. In Radialrichtung R verlaufen Befestigungen, z. B. Streben (nicht dargestellt), an welchen jeweils ein erstes Rotorblatt 110, ein zweites Rotorblatt 120 und ein drittes Rotorblatt 130 bzw. dessen jeweilige Elemente befestigt sind, wie unten noch beschrieben. Es sei angemerkt, dass die Anzahl von Rotorblättern nicht auf drei beschränkt ist, sondern auch eins, zwei, vier oder mehr als vier betragen kann. Ebenso ist in der Ausführungsform gemäß Fig. 1 gezeigt, dass die Rotorblätter 110, 120, 130 gleichartig konfiguriert sind. Auch wenn die weitere Beschreibung diese Annahme aus Gründen der Einfachheit weiterführen wird, ist Konfiguration mehrerer Rotorblätter 110, 120, 130 nicht darauf beschränkt, dass diese gleichartig ist. Wenn im Folgenden von "dem Rotorblatt 110, 120, 130" die Rede ist, schließt dies die jeweils beschriebene Konfiguration eines, mehrerer oder sämtlicher Rotorblätter 110, 120, 130 ein.

Der Rotor 100 rotiert durch die Anordnung und Konfiguration der Rotorblätter 110, 120, 130 stets in der Rotationsrichtung, die in Fig. 1 mit dem Pfeil U der Umfangsrichtung angezeigt ist. Diese Rotationsrichtung bildet die Antriebsrichtung und ist demnach festgelegt.

Das Rotorblatt 110, 120, 130 umfasst eine Mehrzahl von Anströmelementen 111, 112, 113, 114, 115. Die Anzahl der Anströmelemente pro Rotorblatt 110, 120, 130 ist nicht auf fünf beschränkt, und es können auch weniger oder mehr als fünf Anströmelemente bereitgestellt sein. Die mehreren Anströmelemente 111, 112, 113, 114, 115 eines Rotorblattes 110, 120, 130 sind voneinander in Umfangsrichtung U beabstandet angeordnet, beispielsweise in einem Winkelabstand a4 zwischen dem ersten oder vordersten Anströmelement 111 und dem zweiten Anströmelement 112 in Rotationsrichtung, einem Winkelabstand a3 zwischen dem zweiten Anströmelement 112 und dem dritten Anströmelement 113, einem Winkelabstand a2 zwischen dem dritten Anströmelement 113 und dem vierten Anströmelement 114 und einem Winkelabstand α1 zwischen dem vierten Anströmelement 114 und dem fünften Anströmelement 115. Ohne Beschränkung und lediglich beispielhaft gilt beispielsweise al=8°, α2=11°, α3=11° und α4=13°.

Eine Querabrichtung Q1 ist beispielhaft für das fünfte Anströmelement 115 gezeigt. Als die Querabrichtung Q1 wird die Richtung angenommen, die ausgehend vom Achsmittelpunkt der Rotorwelle M einen Mittelpunkt des Anströmelements 115 radial (d. h. in Richtung R) schneidet. Eine Querabrichtung kann demnach für jedes Anströmelement 111, 112, 113, 114, 115 definiert werden.

Die Anströmelemente 111, 112, 113, 114, 115 sind jeweils so gekrümmt, dass sie in Antriebsrichtung eine Vorderkante 151 und eine Hinterkante 152 aufweisen. Im gezeigten Ausführungsbeispiel weisen die Anströmelemente eine dünne Materialstärke auf; dementsprechend sind die Vorderkante 151 und die Hinterkante 152 jeweils mit einem geringen Abstand b voneinander entfernt, der durch die Materialstärke definiert wird. Beispielsweise gilt b < 5 cm.

Die Anströmelemente 111, 112, 113, 114, 115 sind in dem Ausführungsbeispiel außerdem so angeordnet, dass einander benachbarte Elemente jeweils unter Ausbildung eines Spalts d1, d2, d3, d4 voneinander beabstandet sind.

Gemäß dem Ausführungsbeispiel beschreiben in der Schnittebene die äußeren Punkte 161, 162, 163, 164, 165 (und die jeweils gegenüberliegenden äußeren Punkte in Richtung der Rotorwelle M) eine dynamische Strömungsform oder einen Vortrieb in Antriebsrichtung bewirkende Stromlinienform 160.

Die Anströmelemente 111, 112, 113, 114, 115 bewirken durch ihre Formgebung, ihre Beabstandung bzw. die dazwischen liegenden Spalte, dass die Hinterkante 152 und die Vorderkante 151 jeweils so geformt sind, dass sie jeweils bei Anströmung von einer Windkomponente v1, v2 eine in Antriebsrichtung wirkende Antriebskraft auf den Rotor 100 übertragen.

Beispielhaft ist in Fig. 1 eine Windkomponente v1 gezeigt, die achterlicher als die Querabrichtung Q1 auf das Anströmelement 115 auftrifft. Gleichzeitig trifft die Windkomponente v1 auch achterlicher als Querab auf die weiteren zum Rotorblatt 110 gehörigen Anströmelemente 111, 112, 113, 114, 115 auf. Die das Rotorblatt 110 anströmende Windkomponente v1 kann durch die Beabstandung der Anströmelemente 111, 112, 113, 114, 115 durch die Spalte auf die jeweiligen Hinterkanten 152 einwirken und den Rotor 100 in Antriebsrichtung drücken.

In dem Beispiel in Fig. 2 ist eine Windkomponente v2 gezeigt, die vorlicher als die Querabrichtung Q1 auf das Anströmelement 115 auftrifft. Gleichzeitig trifft die Windkomponente v2 auch vorlicher als Querab auf die weiteren zum Rotorblatt 110 gehörigen Anströmelemente 111, 112, 113, 114, 115 auf. Die das Rotorblatt 110 anströmende Windkomponente v2 kann durch die Beabstandung der Anströmelemente 111, 112, 113, 114, 115 durch die Spalte auf die jeweiligen Vorderkanten 151 einwirken und durch die dynamische Strömungswirkung den Rotor 100 in Antriebsrichtung ziehen.

Gleichzeitig wirkt im Beispiel in Fig. 2 die Windkomponente v2 auch auf die Strömungselemente als Ganzes ein, die die dynamische Strömungsform 160 bilden. Dadurch kann der Wirkungsgrad nochmals verbessert werden.

Fig. 3 zeigt ein schematisches Diagramm eines Systems 10 mit einem Rotor 100, einer elektrischen Maschine 200 und einer Steuerungseinheit 300. Die Rotorwelle M ist über eine mechanische Verbindungswelle 250 mit einer Maschinenwelle (nicht dargestellt) der elektrischen Maschine 200 verbunden. Die Verbindungswelle 250 kann auch von einer aus Rotorwelle M und Maschinenwelle gebildet werden. Des Weiteren ist eine Steuerungseinheit signaltechnisch mit der elektrischen Maschine 200 verbunden und so konfiguriert, dass sie die Drehzahl der Verbindungswelle 250, der Maschinenwelle und/oder der Rotorwelle M erfasst und die elektrische Maschine 200 wahlweise im generatorischen Betrieb und im motorischen Betrieb ansteuert. Wenn die erfasste Drehzahl über einen vorgegebenen Zeitraum einen vorgegebenen Schwellenwert unterschreitet, steuert die Steuerungseinheit 300 die elektrische Maschine 200 im motorischen Betrieb an.

## Patentansprüche

1. Rotorblatt (110, 120, 130) für einen Rotor (100) mit vertikaler Rotorwelle (M) und zum strömungsinduzierten Antreiben des Rotors (100) in einer Antriebsrichtung (U), wobei das Rotorblatt (110, 120, 130) eine Mehrzahl von in Antriebsrichtung (U) hintereinander beabstandet angeordneten Anströmelementen (111, 112, 113, 114, 115) umfasst, wobei jedes Anströmelement (111, 112, 113, 114, 115) eine Vorderkante (151) in Antriebsrichtung (U) und eine Hinterkante (152) in Antriebsrichtung (152) umfasst, und wobei die Hinterkante (152) und die Vorderkante (151) jeweils so geformt sind, dass sie jeweils bei Anströmung von einer Windkomponente (v1, v2) eine in Antriebsrichtung (U) wirkende Antriebskraft auf den Rotor (100) übertragen.

2. Rotorblatt (110, 120, 130) nach Anspruch 1, wobei die Vorderkante (151) eine Form aufweist, die eine dynamische Strömungsform zumindest eines Teils des Rotorblatts beschreibt, derart, dass die Vorderkante dann, wenn die Windkomponente aus einer Richtung vorlicher als die Querabrichtung des Rotorblattes anströmt, die Antriebskraft durch einen dynamischen Strömungseffekt, typischerweise dynamischen Auftriebseffekt, auf den Rotor (100) überträgt.

3. Rotorblatt (110, 120, 130) nach Anspruch 2, wobei eine Einhüllende (160) der Mehrzahl von Anströmelementen (111, 112, 113, 114, 115) die dynamische Strömungsform des Rotorblatts (110, 120, 130) beschreibt.

4. Rotorblatt (110, 120, 130) nach einem der vorhergehenden Ansprüche, wobei die Vorderkante (151) eine in Antriebsrichtung konvexe Fläche beschreibt und die Hinterkante (152) eine in Antriebsrichtung konkave Fläche beschreibt.

5. Rotorblatt (110, 120, 130) nach Anspruch 4, wobei die konvexe Fläche und die konkave Fläche jeweils durchgehend gewölbt sind, typischerweise jeweils im Wesentlichen an jedem Ort differenzierbare Flächen beschreiben.

6. Rotorblatt (110, 120, 130) nach einem der vorhergehenden Ansprüche, wobei die Hinterkante (152) eine Angriffsfläche für die Windkomponente (v1) aufweist, deren Flächeninhalt größer ist als eine planare Fläche durch das Anströmelement (111, 112, 113, 114, 115) in Radialrichtung.

7. Rotorblatt (110, 120, 130) nach einem der vorhergehenden Ansprüche, wobei ein Abstand (α4, α3, α2, α1) zwischen der Vorderkante (151) und der Hinterkante (152) einer Mehrzahl der Anströmelemente (111, 112, 113, 114, 115), typischerweise im Wesentlichen sämtlicher Anströmelemente (111, 112, 113, 114, 115) oder sämtlicher Anströmelemente (111, 112, 113, 114, 115), weniger als 5 cm beträgt, typischerweise weniger als 3 cm oder weniger als 2 cm.

8. Rotorblatt (110, 120, 130) nach Anspruch 7, wobei die Mehrzahl der Anströmelemente (111, 112, 113, 114, 115) jeweils als Bleche mit einer Materialstärke von weniger als 5 cm, typischerweise weniger als 3 cm oder weniger als 2 cm ausgebildet sind.

9. Rotorblatt (110, 120, 130) nach einem der vorhergehenden Ansprüche, wobei die Anströmelemente (111, 112, 113, 114, 115) derart in Antriebsrichtung hintereinander angeordnet sind, dass in Umfangsrichtung zwischen zwei benachbarten Anströmelementen (111, 112, 113, 114, 115) ein Spalt mit einer jeweiligen Spaltbreite (d1, d2, d3, d4) ausgebildet ist, wobei die Spaltbreite ein Eingreifen der Windkomponente (v1, v2) zwischen den benachbarten Anströmelementen ermöglicht.

10. Rotorblatt (110, 120, 130) nach einem der vorhergehenden Ansprüche, wobei zumindest eines aus der folgenden Gruppe an im Regelbetrieb zu erwartende Strömungsbedingungen an einem Installationsort und/oder an eine Größe des Rotorblattes angepasst ist: Spaltbreite zwischen zwei benachbarten Anströmelementen; Verlauf unterschiedlicher Spaltbreiten zwischen einer Mehrzahl benachbarter Anströmelemente; Krümmungsradius eines Anströmelements; Verlauf unterschiedlicher Krümmungsradien einer Mehrzahl von Anströmelementen; Anzahl der Anströmelemente pro Rotorblatt.

11. Rotorblatt (110, 120, 130) nach einem der vorhergehenden Ansprüche, wobei die Anströmelemente (111, 112, 113, 114, 115) des Rotorblatts, typischerweise das Rotorblatt im Wesentlichen insgesamt, aus einem Metallmaterial gebildet ist.

12. Rotor (100) mit vertikaler Rotorwelle (M) und mindestens einem Rotorblatt (110, 12, 130) nach einem der vorhergehenden Ansprüche.

13. Rotor (100) nach Anspruch 12, wobei die Anzahl der Rotorblätter (110, 120, 130) an im Regelbetrieb zu erwartende Strömungsbedingungen an einem Installationsort und/oder an eine Größe des Rotorblattes angepasst ist.

14. System (10) mit einem Rotor (100) nach Anspruch 13 und einer elektrischen Maschine (200), wobei die Rotorwelle (M) des Rotors mechanisch an eine Maschinenwelle der elektrischen Maschine (200) gekoppelt ist.

15. System (10) nach Anspruch 14, das ferner eine Steuerungseinheit (300) zum Erfassen einer Drehzahl der Maschinenwelle und/oder der Rotorwelle und zum Ansteuern der elektrischen Maschine wahlweise im generatorischen Betrieb und im motorischen Betrieb umfasst, wobei die Steuerungseinheit so konfiguriert ist, dass sie die elektrische Maschine (200) dann, wenn die erfasste Drehzahl über einen vorgegebenen Zeitraum einen vorgegebenen Schwellenwert unterschreitet, im motorischen Betrieb ansteuert.
